(19) **Europäisches Patentamt / European Patent Office / Office européen des brevets**

(11) **EP 4 162 897 B1**

(12) **EUROPÄISCHE PATENTSCHRIFT**

(45) Veröffentlichungstag und Bekanntmachung des Hinweises auf die Patenterteilung:
**23.07.2025 Patentblatt 2025/30**

(21) Anmeldenummer: **21201449.2**

(22) Anmeldetag: **07.10.2021**

(51) Internationale Patentklassifikation (IPC):
**A61C 13/00** *(2006.01)* **B23Q 17/09** *(2006.01)*

(52) Gemeinsame Patentklassifikation (CPC):
**A61C 13/0004; B23Q 17/0961; B23Q 17/0971; B23Q 17/098; B23Q 17/0995**

(54) **DENTALFRÄSMASCHINE UND DENTALFRÄSVERFAHREN ZUM HERSTELLEN EINES DENTALOBJEKTS**

DENTAL MILLING MACHINE AND PROCESS FOR PRODUCING A DENTAL OBJECT

FRAISEUSE DENTAIRE ET PROCÉDÉ PERMETTANT DE FABRIQUER UN OBJET DENTAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.04.2023 Patentblatt 2023/15**

(73) Patentinhaber: **Ivoclar Vivadent AG**
**9494 Schaan (LI)**

(72) Erfinder:
- **REiNHARDT, Jonas**
**7206 Igis (CH)**
- **GANTIOLER, Andreas**
**6700 Bludenz (AT)**
- **GURSCHLER, Hannes**
**6700 Bludenz (AT)**
- **WELLINGER, Christian**
**6714 Nüziders (AT)**

(74) Vertreter: **Baldus, Oliver**
**Splanemann**
**Rumfordstrasse 7**
**80469 München (DE)**

(56) Entgegenhaltungen:
**EP-A1- 3 453 361      KR-A- 20200 045 309**
**US-A1- 2006 035 776      US-A1- 2009 129 882**
**US-A1- 2019 192 256**

EP 4 162 897 B1

**Beschreibung**

Die vorliegende Erfindung betrifft eine Dentalfräsmaschine zum Herstellen eines Dentalobjekts und Dentalfräsverfahren zum Herstellen eines Dentalobjekts.

Je länger ein Fräswerkzeug im Einsatz ist, desto stumpfer wird dieses, da beispielsweise beschichtete Diamanten des Fräswerkzeuges verschleißen. Dies hat zur Folge, dass das Fräswerkzeug bei der Bearbeitung seitlich weggedrückt wird und weniger Material abgetragen wird. Bei der Herstellung von Dentalobjekten kann es dann vorkommen, dass eine gefertigte Krone nicht auf einen vorgesehenen Stumpf passt oder eine schlechte Passung aufweist, weil zu wenig Material weggenommen wurde.

Daher wird von Zeit zu Zeit das Fräswerkzeug der Dentalfräsmaschine gewechselt. Das Werkstück oder Fräswerkzeug wird durch die Dentalfräsmaschine gemessen und danach werden die Fräsbahnen entsprechend korrigiert. Für diese Aufgabe ist jedoch ein aufwändiger und platzeinnehmender Messtaster erforderlich. Oft wird das Fräswerkzeug zu früh gewechselt, so dass ein hoher Materialaufwand für den Benutzer entsteht. Es kann aber auch vorkommen, dass eine ungenügende Qualität des Fräswerkzeuges nicht erkannt wird oder ein verbrauchtes Fräswerkzeug eingespannt und von der Dentalfräsmaschine nicht erkannt wird. Dies kann sogar zum Bruch eines Fräsers führen.

Zudem werden Frässchablonen (Frästemplates), die die Fräsbahnen und die dazugehörigen Prozessparameter festlegen, wie beispielsweise Vorschub oder Spindeldrehzahl, für jede Indikation auf den schlechtesten möglichen Fall (Worts Case Szenario) ausgelegt. Dieser tritt in der Praxis jedoch selten auf (weniger als 20 %). Daher ist diese Frässchablone langsam und unflexibel. Für über 80 % der gefrästen Teile ist dies im Umkehrschluss nicht optimal. Zudem existiert ein hoher Zeitaufwand, um die Frässchablone zu entwickeln.

Es ist daher die technische Aufgabe der vorliegenden Erfindung, den Zustand eines Bearbeitungswerkzeuges in einer Dentalfräsmaschine auf einfache Weise zuverlässig zu erkennen.

US2009129882 offenbart Verfahren, Systeme und Geräte zur Überwachung von Werkzeugbrüchen und -verschleiß in einer Dentalfräsmaschine, wobei ein erster Beschleunigungsmesser neben der Spindel angeordnet ist und Vibrationen erkennen kann, die mit der Drehung des Fräswerkzeugs verbunden sind. Ein Prozessor, der mit dem ersten Beschleunigungsmesser in Verbindung steht, empfängt Daten und verarbeitet diese, um Änderungen zu erkennen, die auf einen Bruch des Fräswerkzeugs hinweisen.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch eine Dentalfräsmaschine zum Herstellen eines Dentalobjekts gelöst, mit einer Sensoreinheit zum Erfassen von Signalen, die durch ein Bearbeitungswerkzeug verursacht werden; und einer elektronischen Steuereinheit zum Steuern des Bearbeitungswerkzeuges auf Basis der erfassten Signale. Durch die Dentalfräsmaschine wird beispielsweise der technische Vorteil erreicht, dass der Zustand oder eine Abnutzung des Bearbeitungswerkzeugs durch die Bearbeitung des Werkstücks erkannt werden kann. Wenn der Zustand des Bearbeitungswerkzeugs bekannt ist, kann das Fräsprogramm so angepasst oder korrigiert werden, dass die Passung des hergestellten Dentalobjektes stets in den Spezifikationen ist. Durch die erfassten Signale kann die Dentalfräsmaschine "fühlen", was bei der Bearbeitung zwischen Werkstück und Bearbeitungswerkzeug geschieht. Anschließend kann eine entsprechende Korrektur vorgenommen werden.

In einer technisch vorteilhaften Ausführungsform der Dentalfräsmaschine ist das Signal ein Schallsignal, das durch das Bearbeitungswerkzeug im Werkstück erzeugt wird, ein Schwingungssignal, das durch das Bearbeitungswerkzeug im Werkstück erzeugt wird, und/oder eine Kraftsignal, das durch das Bearbeitungswerkzeug auf das Werkstück ausgeübt wird.

Das Schallsignal kann ein Schall in der Luft oder ein Schall im Werkstück sein. Dadurch wird beispielsweise der technische Vorteil erreicht, dass der Zustand des Bearbeitungswerkzeugs auf einfache und schnelle Weise mit einer hohen Präzision erkannt werden kann.

In einer weiteren technisch vorteilhaften Ausführungsform der Dentalfräsmaschine ist die Dentalfräsmaschine ausgebildet, eine Simulation auf Basis der erfassten Signale auszuführen, um einen Fräsprozess zu berechnen. Dadurch wird beispielsweise der technische Vorteil erreicht, dass unterschiedliche Fräsprozesse vorab mit geeigneten Parametern und auf Basis des erfassten Zustandes des Bearbeitungswerkzeuges simuliert werden können. Aus der Menge der simulierten Fräsprozesse kann anschließend beispielsweise derjenige ausgewählt werden, der die schnellste Bearbeitung des Dentalobjektes ermöglicht oder derjenige der einen schonendsten Fräsprozess mit geringster Abnutzung des Fräswerkzeugs ermöglicht.

Gemäß der Erfindung ist die elektronische Steuereinheit ausgebildet, einen Vorschub, einen Bahnabstand und/oder eine Drehzahl des Bearbeitungswerkzeugs auf Basis der erfassten Signale zu steuern. Die elektronische Steuereinheit kann ausgebildet sein, das Bearbeitungswerkzeug auf Basis der erfassten Signale in Echtzeit zu steuern. Dadurch wird beispielsweise der technische Vorteil erreicht, dass das Werkstück effizient und genau bearbeitet werden kann.

In einer weiteren technisch vorteilhaften Ausführungsform der Dentalfräsmaschine ist die Steuereinheit ausgebildet, eine Abnutzung des Bearbeitungswerkzeugs auf Basis der erfassten Signale zu ermitteln. Dadurch wird beispielsweise der technische Vorteil erreicht, dass das Bearbeitungswerkzeug abnutzungsgemäß ersetzt werden kann.

In einer weiteren technisch vorteilhaften Ausführungsform der Dentalfräsmaschine ist die Steuereinheit ausgebildet, das Bearbeitungswerkzeug auf Basis der ermittelten Abnutzung zu steuern. Eine Korrektur der Dimension kann abhängig vom Zustand des Bearbeitungswerkzeugs gesteuert werden. Dadurch wird beispielsweise der technische Vorteil erreicht, dass eine Bearbeitungsgenauigkeit zusätzlich erhöht werden kann über die ganze Lebensdauer eines Fräswerkzeugs.

In einer weiteren technisch vorteilhaften Ausführungsform der Dentalfräsmaschine ist die Sensoreinheit ausgebildet, einen Spindelstromsignal zu erfassen. Dadurch wird beispielsweise der technische Vorteil erreicht, dass der Zustand des Bearbeitungswerkzeugs auf einfache Weise ermittelt werden kann.

In einer weiteren technisch vorteilhaften Ausführungsform der Dentalfräsmaschine ist die Sensoreinheit ausgebildet, die Signale kontaktlos zum Werkstück zu erfassen. Dies kann beispielsweise durch eine Sensoreinheit geschehen, die ein Schallsignal, eine Schwingung oder einen Spindelstrom erfasst. Die Sensoreinheit steht dabei in keinem unmittelbaren Kontakt zum Werkstück. Dadurch wird beispielsweise der technische Vorteil erreicht, dass der Zustand des Bearbeitungswerkzeugs auf einfache Weise ermittelt werden kann.

In einer weiteren technisch vorteilhaften Ausführungsform der Dentalfräsmaschine ist die Sensoreinheit mechanisch an das Werkstück angekoppelt. Die Sensoreinheit steht dabei in unmittelbaren Kontakt zum Werkstück. Die Sensoreinheit kann hierzu direkt mit dem Werkstück oder dem Werkstückhalter verbunden sein. Dadurch wird beispielsweise der technische Vorteil erreicht, dass die Signale, die bei der Bearbeitung des Werkstücks entstehen, genau erfasst werden können.

Gemäß einem zweiten Aspekt wird die technische Aufgabe durch ein Dentalfräsverfahren zum Herstellen eines Dentalobjekts gelöst, mit den Schritten eines Erfassens von Signalen, die durch ein Bearbeitungswerkzeug verursacht werden, durch eine Sensoreinheit; und eines Steuerns des Bearbeitungswerkzeuges auf Basis der erfassten Signale durch eine elektronische Steuereinheit. Durch das Dentalfräsverfahren werden die gleichen technischen Vorteile wie durch die Dentalfräsmaschine nach dem ersten Aspekt erreicht.

In einer technisch vorteilhaften Ausführungsform des Dentalfräsverfahrens wird eine Simulation auf Basis der Signale ausgeführt, um einen Fräsprozess zu berechnen. Die Simulation kann einen digitalen Zwilling der Dentalfräsmaschine verwenden. Dieser ermöglicht es, eine Dynamik der Dentalfräsmaschine zu simulieren. Dadurch wird beispielsweise ebenfalls der technische Vorteil erreicht, dass der Zustand des Bearbeitungswerkzeugs auf einfache und schnelle Weise mit einer hohen Präzision erkannt werden kann.

In einer weiteren technisch vorteilhaften Ausführungsform des Dentalfräsverfahrens wird ein Bahnabstand und/oder eine Drehzahl des Bearbeitungswerkzeugs auf Basis der erfassten Signale gesteuert. Dadurch wird beispielsweise ebenfalls der technische Vorteil erreicht, dass das Werkstück schnell und präzise mit möglichst wenig Verschleiß bearbeitet werden kann.

In einer weiteren technisch vorteilhaften Ausführungsform des Dentalfräsverfahrens wird eine Abnutzung des Bearbeitungswerkzeugs auf Basis der Signale ermittelt. Dadurch wird beispielsweise ebenfalls der technische Vorteil erreicht, dass das Bearbeitungswerkzeug abnutzungsgemäß ersetzt werden kann.

In einer weiteren technisch vorteilhaften Ausführungsform des Dentalfräsverfahrens wird das Bearbeitungswerkzeug auf Basis der ermittelten Abnutzung gesteuert. Dadurch wird beispielsweise ebenfalls der technische Vorteil erreicht, dass eine Bearbeitungsgenauigkeit zusätzlich erhöht werden kann.

In einer weiteren technisch vorteilhaften Ausführungsform des Dentalfräsverfahrens wird ein Spindelstromsignal erfasst. Dadurch wird beispielsweise der technische Vorteil erreicht, dass der Zustand des Bearbeitungswerkzeugs auf einfache Weise ermittelt werden kann.

Die Erfindung ist wie in den Ansprüchen definiert.

Ausführungsbeispiele der Erfindung sind in den Zeichnungen dargestellt und werden im Folgenden näher beschrieben.

Es zeigen:

Fig. 1 eine schematische Ansicht einer Dentalfräsmaschine;

Fig. 2 einen Fehler beim Bearbeiten eines Werkstücks;

Fig. 3 ein Diagramm über Vorschub und Belastung eines Bearbeitungswerkzeugs; und

Fig. 4 ein Blockdiagram eines Dentalfräsverfahren zum Herstellen eines Dentalobjekts.

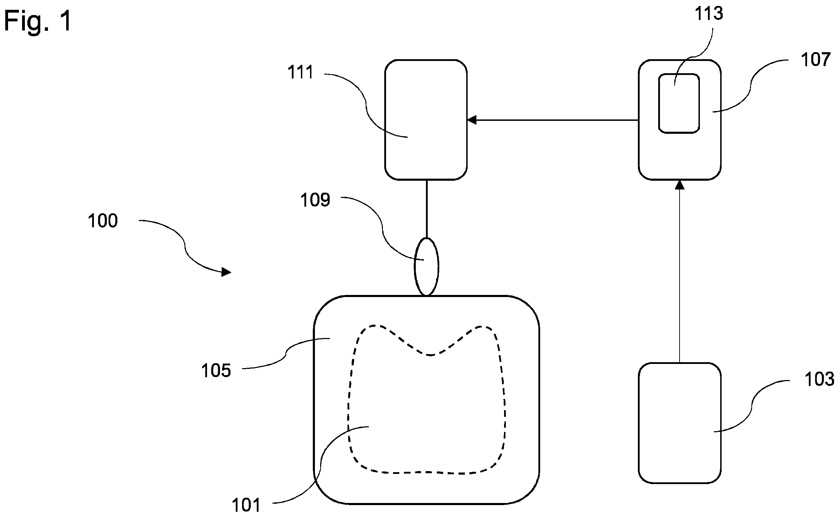

Fig. 1 zeigt eine schematische Ansicht einer Dentalfräsmaschine 100. Die Dentalfräsmaschine 100 dient zum Herstellen eines Dentalobjektes 101, wie beispielsweise eine Krone, eine Brücke, ein Veneer, ein Abutment, ein Inlay oder ein Onlay. Das Dentalobjekt 101 wird durch die Dentalfräsmaschine 100 mittels eines spanabhebenden Verfahrens aus einem Rohling als Werkstück 105 erzeugt. Hierzu wird ein Bearbeitungswerkzeug 109 mittels einer elektrisch angetriebenen Drehspindel 111 in Rotation versetzt. Das Material des Werkstückes wird durch das bewegliche Bearbeitungswerkzeug 109 abgetragen, bis die gewünschte räumliche Form des Dentalobjekts 101 erreicht ist. Das Bearbeitungswerkzeug 109 kann ein Fräswerkzeug oder ein Polierwerkzeug für das Werkstück 105 sein.

Die Dentalfräsmaschine 100 umfasst eine Sensoreinheit 103 zum Erfassen eines Signals, das durch das Bearbeitungswerkzeug 109 beim Bearbeiten des Werkstückes 105 verursacht oder erzeugt wird. Das Signal entspricht einer physikalischen Größe bei der Bearbeitung des Werkstücks 105. Dies kann beispielsweise eine Schwingung, ein Körperschall, eine Akustik oder eine Kraft sein, die bei der Bearbeitung des Werkstückes 105 auftritt. Die Sensoreinheit 103 ist in der Lage, Signale zu erfassen, die während dem Bearbeiten des Werkstückes 105 durch das Bearbeitungswerkzeug 109 erzeugt werden. Die Signale können einzeln oder gleichzeitig erfasst werden. Der die Erfassung der Signale bei der Bearbeitung des Werkstücks, erhält die Dentalfräsmaschine 100 eine Rückkopplung bei der Bearbeitung.

Die erfassten Signale werden an eine elektronische Steuereinheit 107 weitergeleitet und dort ausgewertet. Die elektronische Steuereinheit 107 steuert das Bearbeitungswerkzeug 109 nach der Auswertung auf Basis der erfassten Signale. Die Auswertung der Signale und die Anpassung der Steuerung der Dentalfräsmaschine 100 erfolgt in Echtzeit. Gemäß der Erfindung steuert die elektronische Steuereinheit 107 eine Drehzahl, einen Vorschub und/oder eine räumliche Bewegung des Bearbeitungswerkzeuges 109.

Zudem kann die elektronische Steuereinheit 107 aus den erfassten Signalen eine Abnutzung des Bearbeitungswerkzeugs 109 berechnen und bei der Steuerung des Bearbeitungswerkzeuges 109 berücksichtigen. Wird beispielsweise anhand der erfassten Signale festgestellt, dass sich der Durchmesser des Bearbeitungswerkzeugs 109 verringert hat, kann dieses nachgeführt werden, um die festgestellte Abnutzung oder ein Verbiegen des Werkzeugs zu kompensieren. Dieses Verfahren kann anschließend wiederholt werden, um die Abnutzung des Bearbeitungswerkzeuges 109 kontinuierlich auszugleichen.

Die Steuereinheit 109 umfasst beispielsweise einen Mikroprozessor und einen elektronischen Datenspeicher, wie beispielsweise einen RAM-Speicher. In dem Datenspeicher sind Verarbeitungsprograme und digitale Daten für die erfassten Signale abgelegt. Der Mikroprozessor kann die digitalen Daten weiterverarbeiten.

Anhand von Signalen der Sensoreinheit 103 kann der Zustand des Bearbeitungswerkzeugs 109 ermittelt werden und der Fräsprozess bezüglich der gefrästen Dimensionen nachgestellt und korrigiert werden. Es kann einen definierten, beispielsweise linearen, Zusammenhang zwischen dem Zustand des Bearbeitungswerkzeugs 109 den erfassten Signalen geben. Je größer die Schwingungssignale sind, desto größer kann beispielsweise eine Abnutzung des Bearbeitungswerkzeugs 109 sein. Es kann aber auch ein neuronales Netzwerk trainiert werden, um beispielsweise anhand der erfassten Signale den Zustand des Bearbeitungswerkzeuges 109 zu bestimmen.

Das von der Sensoreinheit 107 erfasste Signal kann beispielsweise ein Schallsignal sein, das durch das Bearbeitungswerkzeug 109 im Werkstück 105 erzeugt wird. Das Schallsignal kann durch ein Mikrofon als Sensoreinheit 103 aufgezeichnet werden. Die elektronische Steuereinheit 107 wertet anschließend das erfasste Schallsignal aus.

Das von der Sensoreinheit 107 erfasste Signal kann beispielsweise ein Schwingungssignal sein, das durch das Bearbeitungswerkzeug 109 im Werkstück 105 erzeugt wird. Das Schwingungssignal kann durch einen Schwingungssensor als Sensoreinheit 103 aufgezeichnet werden. Die elektronische Steuereinheit 107 wertet anschließend das erfasste Schwingungssignal aus.

Das von der Sensoreinheit 103 erfasste Signal kann beispielsweise ein Kraftsignal sein, das durch das Bearbeitungswerkzeug 109 auf das Werkstück 105 ausgeübt wird. Das Kraftsignal kann durch einen Kraftsensor als Sensoreinheit 103 aufgezeichnet werden. Die elektronische Steuereinheit 107 wertet anschließend das erfasste Kraftsignal aus. Dadurch wird beispielsweise der technische Vorteil erreicht, dass Kraftspitzen über der Belastungsgrenze der Bearbeitungsspindel oder des Bearbeitungswerkzeug vermieden werden.

Das von der Sensoreinheit 107 erfasste Signal kann beispielsweise ein Spindelstromsignal von einem Spindelstrom sein, der bei der Bearbeitung des Werkstücks 105 durch einen Elektromotor einer Drehspindel 111 fließt. Das Spindelstromsignal kann durch ein Strommesser als Sensoreinheit 103 aufgezeichnet werden. Die elektronische Steuereinheit 107 wertet das erfasste Spindelstromsignal aus. Die Dentalfräsmaschine 100 misst somit den Spindelstrom und verlangsamt den Prozess, wenn der Fräser alt oder verbraucht ist. Wenn optimale Bedingungen herrschen, kann der Fräsprozess beschleunigt werden.

Die Sensoreinheit 103 kann die Signale kontaktlos zum Werkstück 105 erfassen. In diesem Fall berührt die Sensoreinheit 103 das Werkstück 105 nicht direkt. Beispielsweise kann ein Mikrofon die Schallsignale bei der Bearbeitung des Werkstücks 105 aufzeichnen, die durch die Luft über eine gewisse Entfernung übertragen werden.

Die Sensoreinheit 103 kann aber auch direkt mechanisch an das Werkstück 105 angekoppelt sein. Beispielsweise kann ein Mikrofon die Schallsignale bei der Bearbeitung des Werkstücks 105 aufzeichnen, die direkt durch das Werkstück 105 übertragen werden und an diesem gemessen werden.

Die Steuereinheit 107 kann eine Lernkurve aus adaptiven Verfahren verwenden. Beispielsweise kann ein trainiertes künstliches neuronales Netz 113 verwendet werden, um einen Zustand des Bearbeitungswerkzeuges 109 zu erkennen. Das künstliche neuronales Netz 113 ist ein System aus Hardware und/oder Software, das der Funktionsweise von Neuronen im menschlichen Gehirn nachgebildet ist.

Hierzu erkennt das neuronale Netz 113 trainierte Muster in den Signalen, wie beispielsweise in den erfassten Schallsignalen, Schwingungssignalen, Kraftsignalen oder Spindelstromsignalen. Erkennt das neuronale Netz ein antrainiertes Muster in den Signalen, kann diesem Muster ein bestimmter Zustand oder Abnutzungsgrad des Bearbeitungswerkzeugs 109 zugeordnet werden. Tritt beispielsweise ein bestimmtes Schwingungsmuster auf, wird von dem neuronalen Netz beispielsweise erkannt, dass das Bearbeitungswerkzeug eine Abnutzung von 10% aufweist. Diese Korrektur kann auch beim Polieren verwendet werden, da sich der Durchmesser des Polierwerkzeuges durch die Abnutzung ändert. Dies kann aber auch durch eine konstante Kraft auf das Polierwerkzeug gelöst werden.

Durch die Dentalfräsmaschine 100 kann der Bearbeitungsprozess immer in einem optimalen Bereich gefahren werden, wie beispielsweise so schnell wie möglich mit dem geringsten Verschleiß. Eine Anpassung des Bearbeitungsprozesses kann durch die Sensoreinheit 103 gewährleistet werden. Da die Dentalfräsmaschine 100 während dem Bearbeitungsprozess erkennt, ob schneller gefahren werden kann oder mehr Material abgetragen werden kann, ist es möglich, die Bearbeitung zu beschleunigen. Werkzeugbrüche und Chipping (kleine Ausbrüche am Werkstück) können durch die Dentalfräsmaschine 100 wirksam verhindert werden.

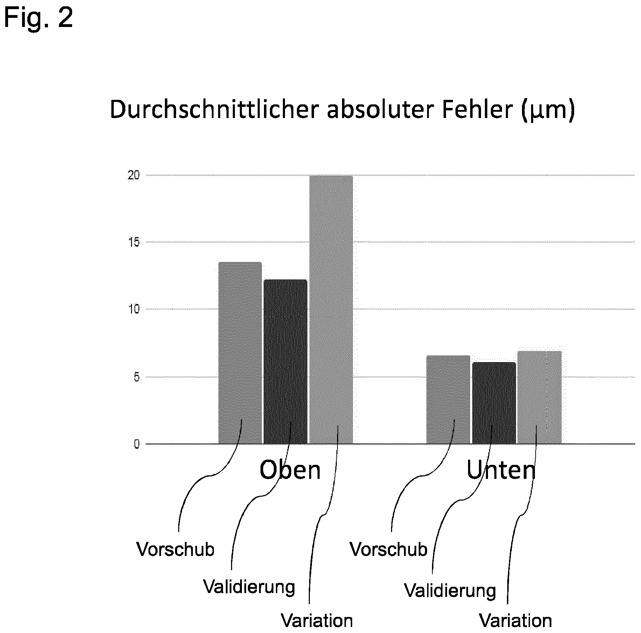

Fig. 2 zeigt einen Fehler beim Bearbeiten eines Werkstücks 105 und eine Vorhersehbarkeit eines Fräswerkzeugzustands an der Oberseite (Oben) und der Unterseite (Unten) des Werkstücks 105. Der mittlere absolute Fehler einer Voraussage nur anhand von Schwingungsdaten liegt bei ca. 12 μm. Daher ist es möglich nur anhand von gemessenen Schwingungen während dem Fräsprozess die Standzeit auf ± 6 Kronen vorauszusagen. Für diese Kombination von Dentalfräsmaschine 100 und Bearbeitungswerkzeug 109 wird beispielsweise eine Zunahme der Abweichung von 2 μm pro gefräste Krone ermittelt.

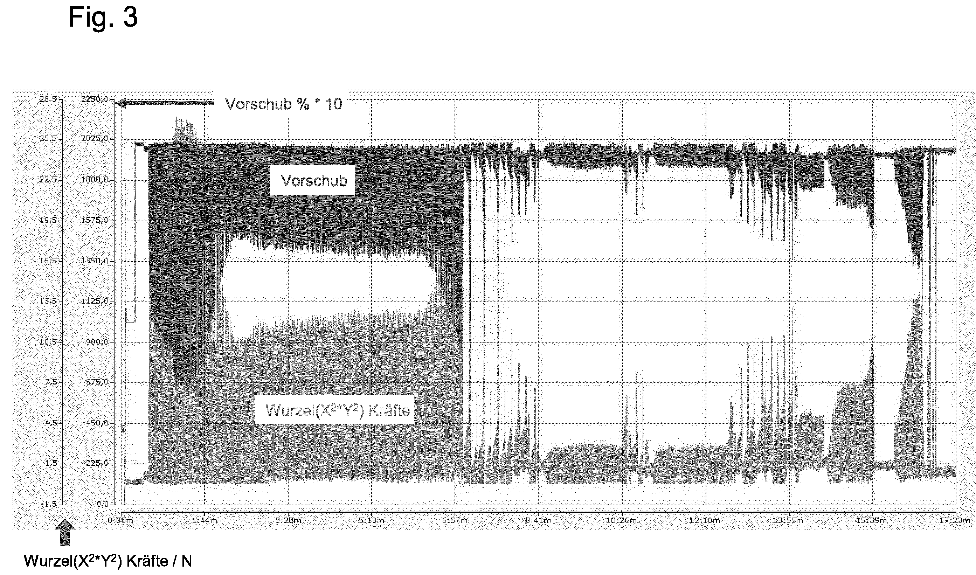

Fig. 3 zeigt ein Diagramm über Vorschub und Belastung des Bearbeitungswerkzeugs 109 bei einer adaptiven Steuerung in Echtzeit. Die Belastung B des Bearbeitungswerkzeugs 109 berechnet sich aus der Kraft auf das Bearbeitungswerkzeug in X-Richtung $F_X$ und der Kraft $F_y$ auf das Bearbeitungswerkzeug in y-Richtung als

$$B = \sqrt{F_x^2 + F_y^2}$$

Wenn die Belastung B steigt, verkleinert die Steuereinheit 107 den Vorschub entsprechend in Echtzeit.

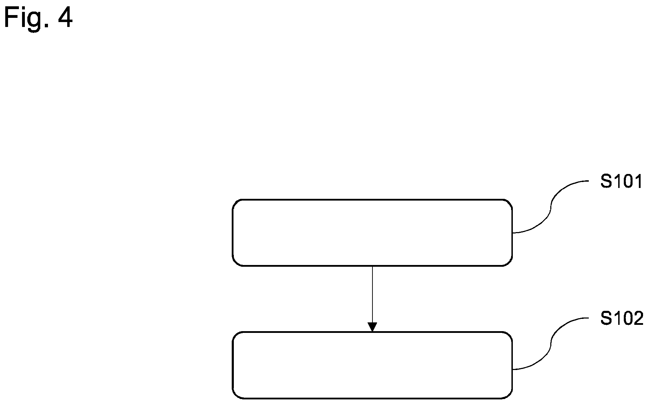

Fig. 4 zeigt ein Blockdiagram eines Dentalfräsverfahren zum Herstellen eines Dentalobjekts. Das Dentalfräsverfahren umfasst den Schritt S101 eines Erfassens von Signalen, die durch das Bearbeitungswerkzeug 109 verursacht werden, durch eine Sensoreinheit 103; und den Schritt S102 eines Steuerns des Bearbeitungswerkzeuges 109 auf Basis der erfassten Signale durch eine elektronische Steuereinheit 107.

Durch das Dentalfräsverfahren werden die technischen Vorteile erreicht, dass Dentalobjekte präziser gefertigt werden können und weniger Ausschuss entsteht. Zudem ist das Dentalfräsverfahren robuster als herkömmliche Verfahren.

Die Dentalfräsmaschine 100 kann ausgebildet sein, eine Simulation auf Basis der erfassten Signale auszuführen, um einen Fräsprozess zu berechnen. In diesem Fall könne mehrere Simulationen mit unterschiedlichen Parametern durchgeführt werden. Aus diesen Simulationen wird anschließend diejenigen Parameter ausgewählt, die den gewünschten Bearbeitungsvorgang ermöglichen.

Bei einem Schonfräsvorgang wird beispielsweise weniger Abnutzung des Fräswerkzeuges erzeugt, so dass insgesamt mehr Werkstücke bearbeitet werden können. Bei einem Schnellfräsvorgang wird das Dentalobjekt auf die schnellste Weise aus dem Werkstück herausgefräst. Bei einem Präzisionsfräsvorgang wird das Dentalobjekt mit der größtmöglichen Oberflächenqualität und Passung hergestellt. Die Parameter für diese Vorgänge werden aus den Simulationen gewonnen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

BEZUGSZEICHENLISTE

| | |
|---|---|
| 100 | Dentalfräsmaschine |
| 101 | Dentalobjekts |
| 103 | Sensoreinheit |
| 105 | Werkstück |
| 107 | Steuereinheit |
| 109 | Bearbeitungswerkzeug |
| 111 | Drehspindel |
| 113 | Neuronales Netz |

**Patentansprüche**

1. Dentalfräsmaschine (100) zum Herstellen eines Dentalobjekts (101), mit:

- einer Sensoreinheit (103) zum Erfassen von Signalen, die durch ein Bearbeitungswerkzeug (109) verursacht werden; und
- einer elektronischen Steuereinheit (107) zum Steuern eines Vorschubs, eines Bahnabstands und/oder einer Drehzahl des Bearbeitungswerkzeugs (109) auf Basis der erfassten Signale.

2. Dentalfräsmaschine (100) nach Anspruch 1, wobei das Signal ein Schallsignal ist, das durch das Bearbeitungswerkzeug (109) im Werkstück (105) erzeugt wird, ein Schwingungssignal ist, das durch das Bearbeitungswerkzeug (109) im Werkstück (105) erzeugt wird, und/oder ein Kraftsignal ist, das durch das Bearbeitungswerkzeug (109) auf das Werkstück (105) ausgeübt wird.

3. Dentalfräsmaschine (100) nach einem der vorangehenden Ansprüche, wobei die Dentalfräsmaschine (100) ausgebildet ist, eine Simulation auf Basis der erfassten Signale auszuführen, um einen Fräsprozess zu berechnen.

4. Dentalfräsmaschine (100) nach einem der vorangehenden Ansprüche, wobei die Steuereinheit (107) ausgebildet ist, eine Abnutzung des Bearbeitungswerkzeugs (109) auf Basis der erfassten Signale zu ermitteln.

5. Dentalfräsmaschine (100) nach einem der vorangehenden Ansprüche, wobei die Steuereinheit (107) ausgebildet ist, das Bearbeitungswerkzeug (109) auf Basis der ermittelten Abnutzung zu steuern.

6. Dentalfräsmaschine (100) nach einem der vorangehenden Ansprüche, wobei die Sensoreinheit (103) ausgebildet ist, eine Spindelstromsignal zu erfassen.

7. Dentalfräsmaschine (100) nach einem der vorangehenden Ansprüche, wobei die Sensoreinheit (103) ausgebildet ist, die Signale kontaktlos zum Werkstück (105) zu erfassen.

8. Dentalfräsmaschine (100) nach einem der vorangehenden Ansprüche, wobei die Sensoreinheit (103) mechanisch an das Werkstück (105) angekoppelt ist.

9. Dentalfräsverfahren zum Herstellen eines Dentalobjekts, mit den Schritten:

- Erfassen (S101) von Signalen, die durch ein Bearbeitungswerkzeug (109) verursacht werden, durch eine Sensoreinheit (103); und
- Steuern (S102) eines Vorschubs, eines Bahnabstands und/oder einer Drehzahl des Bearbeitungswerkzeuges (109) auf Basis der erfassten Signale durch eine elektronische Steuereinheit (107).

10. Dentalfräsverfahren nach Anspruch 9, wobei eine Simulation auf Basis der erfassten Signale ausgeführt wird, um einen Fräsprozess zu berechnen.

11. Dentalfräsverfahren nach einem der Ansprüche 9 oder 10, wobei eine Abnutzung des Bearbeitungswerkzeugs (109) auf Basis der erfassten Signale ermittelt wird.

12. Dentalfräsverfahren nach Anspruch 11, wobei das Bearbeitungswerkzeug (109) auf Basis der ermittelten Abnutzung gesteuert wird.

13. Dentalfräsverfahren nach einem der Ansprüche 9 bis 12, wobei ein Spindelstromsignal erfasst wird.

**Claims**

1. A dental milling machine (100) for producing a dental object (101), comprising:

- a sensor unit (103) for detecting signals caused by a machining tool (109); and
- an electronic control unit (107) for controlling a feed rate, a path distance and/or a rotational speed of the machining tool (109) on the basis of the detected signals.

2. The dental milling machine (100) according to claim 1, wherein the signal is a sound signal generated by the machining tool (109) in the workpiece (105), a vibration signal generated by the machining tool (109) in the workpiece (105), and/or a force signal applied by the machining tool (109) to the workpiece (105).

3. The dental milling machine (100) according to any of the preceding claims, wherein the dental milling machine (100) is configured to perform a simulation based on the detected signals to calculate a milling process.

4. The dental milling machine (100) according to any of the preceding claims, wherein the control unit (107) is configured to determine wear of the machining tool (109) based on the detected signals.

5. The dental milling machine (100) according to any of the preceding claims, wherein the control unit (107) is configured to control the machining tool (109) based on the determined wear.

6. The dental milling machine (100) according to any of the preceding claims, wherein the sensor unit (103) is configured to detect a spindle current signal.

7. The dental milling machine (100) according to any of the preceding claims, wherein the sensor unit (103) is configured to detect the signals without contact with the workpiece (105).

8. The dental milling machine (100) according to any of the preceding claims, wherein the sensor unit (103) is mechanically coupled to the workpiece (105).

9. A dental milling method for producing a dental object, comprising the steps of:

- detecting (S101) signals caused by a machining tool (109) by a sensor unit (103); and
- controlling (S102) a feed rate, a path distance and/or a rotational speed of the machining tool (109) on the basis of the detected signals by an electronic control unit (107).

10. The dental milling method according to claim 9, wherein a simulation is performed based on the detected signals to calculate a milling process.

11. The dental milling method according to claim 9 or 10, wherein wear of the machining tool (109) is determined based on the detected signals.

12. The dental milling method according to claim 11, wherein the machining tool (109) is controlled based on the determined wear.

13. The dental milling method according to any of claims 9 to 12, wherein a spindle current signal is detected.

**Revendications**

1. Fraiseuse dentaire (100) pour la fabrication d'un objet dentaire (101), comprenant :

- une unité de détection (103) pour capter des détecter provoqués par un outil d'usinage (109) ; et
- une unité de commande électronique (107) pour commander une avance, une distance de trajectoire et/ou une vitesse de rotation de l'outil d'usinage (109) sur la base des signaux détectés.

2. Fraiseuse dentaire (100) selon la revendication 1, où le signal est un signal sonore généré par l'outil d'usinage (109) dans la pièce à usiner (105), un signal de vibration généré par l'outil d'usinage (109) dans la pièce à usiner (105) et/ou un signal de force exercé par l'outil d'usinage (109) sur la pièce à usiner (105).

3. Fraiseuse dentaire (100) selon l'une des revendications précédentes, où la fraiseuse dentaire (100) est configurée pour exécuter une simulation sur la base des signaux détectés afin de calculer un processus d'usinage.

4. Fraiseuse dentaire (100) selon l'une des revendications précédentes, où l'unité de commande (107) est configurée pour déterminer l'usure de l'outil d'usinage (109) sur la base des signaux détectés.

5. Fraiseuse dentaire (100) selon l'une des revendications précédentes, où l'unité de commande (107) est configurée pour commander l'outil d'usinage (109) sur la base de l'usure déterminée.

6. Fraiseuse dentaire (100) selon l'une des revendications précédentes, où l'unité de détection (103) est configurée pour acquérir un signal de courant de broche.

7. Fraiseuse dentaire (100) selon l'une des revendications précédentes, où l'unité de capteur (103) est configurée pour détecter les signaux sans contact avec la pièce à usiner (105).

8. Fraiseuse dentaire (100) selon l'une des revendications précédentes, où l'unité de détection (103) est couplée mécaniquement à la pièce à usiner (105).

9. Méthode d'usinage dentaire pour la fabrication d'un objet dentaire, comprenant les étapes suivantes :

- détection (S101) de signaux provoqués par un outil d'usinage (109) par une unité de détection (103) ; et
- commande (S102) d'une avance, d'une distance de trajectoire et/ou d'une vitesse de rotation de l'outil d'usinage (109) sur la base des signaux détectés par une unité de commande électronique (107).

10. Procédé de fraisage dentaire selon la revendication 9, dans lequel une simulation est exécutée sur la base des signaux détectés pour calculer un processus d'usinage.

11. Procédé de fraisage dentaire selon l'une des revendications 9 ou 10, où l'usure de l'outil d'usinage (109) est déterminée sur la base des signaux détectés.

12. Procédé de fraisage dentaire selon la revendication 11, où l'outil d'usinage (109) est commandé sur la base de l'usure déterminée.

**13.** Procédé de fraisage dentaire selon l'une des revendications 9 à 12, où un signal de courant de broche est détecté.

Fig. 1

Fig. 2

## Durchschnittlicher absoluter Fehler (µm)

EP 4 162 897 B1

Fig. 3

EP 4 162 897 B1

## Fig. 4

**IN DER BESCHREIBUNG AUFGEFÜHRTE DOKUMENTE**

**In der Beschreibung aufgeführte Patentdokumente**

- US 2009129882 A